# EUROPEAN PATENT SPECIFICATION

(11) **EP 3 559 427 B1**
(45) Date of publication and mention of the grant of the patent: **10.03.2021**
(21) Application number: 16836048.5
(22) Date of filing: 22.12.2016
(51) Int. Cl.: F02B 21/00

(54) **A GAS FEEDING ARRANGEMENT**
GASFÜHRUNGSANORDNUNG
ARRANGEMENT D'ALIMENTATION AU GAZ

(43) Date of publication of application: 30.10.2019
(73) Proprietor: Volvo Truck Corporation, 405 08 Göteborg (SE)
(72) Inventor: SVENSSON, Stig Arne, 423 46 Torslanda (SE)
(74) Representative: Valea AB
(86) International application number: PCT/EP2016/082467
(87) International publication number: WO 2018/113987

(56) References cited:
- FR-A1- 2 831 605
- FR-A1- 2 922 162
- GB-A- 2 235 951
- US-A- 5 934 245
- US-A1- 2014 083 395

## Description

### TECHNICAL FIELD

The present invention relates to a cylinder head assembly according to the preamble of claim 1. Moreover, the present invention relates to an internal combustion engine and a vehicle.

The invention can be applied in heavy-duty vehicles, such as trucks, buses and construction equipment. Although the invention will be described with respect to a truck, the invention is not restricted to this particular vehicle, but may also be used in other vehicles such as buses, construction equipment or seagoing vessels such as boats. Moreover, the present invention may be used in an internal combustion engine not necessarily being located in or on a vehicle.

### BACKGROUND

An internal combustion engine, or a component associated with an internal combustion engine, such as a vehicle component, may need to be supplied with pressurized air. For instance, pressurized air may be used for the suspension of a vehicle. As another alternative, pressurized air may be fed to an internal combustion engine cylinder chamber in addition to air fed from an air inlet system of an internal combustion engine. For instance, when an internal combustion engine is operated at a low engine speed and/or at low load, it may be desired to add pressurized air to the cylinder chamber from a source of pressurized air in order to improve the combustion efficiency of the internal combustion engine.

An example of a source of pressurized air may be a gas tank adapted to receive, store and discharge pressurized air. In order to supply pressurized air to such a gas tank, a cylinder chamber of the internal combustion engine, such as a cylinder combustion chamber thereof, may be used.

An example of a gas tank being supplied with pressurized air from an internal combustion chamber is illustrated in FR 26885769. The system presented in '769 comprises a gas tank, a cylinder chamber and a valve for controlling the fluid communication between the gas tank and the cylinder chamber. However, the '769 system requires a precise control thereof in order to avoid pressurized air being inadvertently directed to other components, such as an exhaust system, of the '769 internal combustion engine.

According to its abstract, GB 2 235 951 A discloses that an independent air-feeding valve is provided in each cylinder, the valve being operated by a cam so as to be opened towards the end of the power stroke. In an engine with fuel injection the compressed air from one cylinder on its compression stroke may be fed through the supplementary valve to a storage tank and from the tank to another cylinder during its power stroke. A further valve may be provided in the flow path from the supplementary valve to the tank.

According to its abstract, FR 2 831 605 A1 relates to a power system that consists of an internal combustion engine with gas inlet and exhaust systems and a pressurised gas accumulator linked to a control unit to enhance engine performance. The accumulator has a gas outlet connected to the engine gas inlet through a valve operated by the control unit to inject gas into the engine via a manifold with a pressure reducer. The intake of the gas accumulator is connected to the engine's exhaust system, which has a double valve feeding the accumulator and the main exhaust line.

According to its abstract, US2014/083395 A1 relates to an air charging system that includes a valve providing access to an engine cylinder, an accumulator coupled in flow communication with the valve, and a controller operable to open and close the valve until a threshold pressure condition is reached in the accumulator. Compressed gases stored in the accumulator are used in a fuel delivery system to prepare a charge of fuel that is delivered to an engine.

### SUMMARY

An object of the invention is to provide a cylinder head assembly for an internal combustion engine, wherein the cylinder head assembly comprises a gas feeding arrangement for feeding gas from an internal combustion engine cylinder chamber to a gas tank, which gas feeding arrangement is associated with a low risk of directing pressurized air to undesired components.

The above object is achieved by a cylinder head assembly according to claim 1.

As such, the present invention relates to a cylinder head assembly in accordance with appended claim 1.

As used herein, the feature "one-way valve" is intended to encompass a valve that allows fluid, such as gas, to flow through it in only one direction. For instance, a one-way valve may be exemplified by a check valve, such as a ball check valve.

The above-mentioned one-way valve implies that there is a low risk that gas, such as air, retained in the gas tank will inadvertently be redirected back to the cylinder chamber, via the feeding conduit assembly. This in turn implies that the dedicated feeding valve need not necessarily be controlled such that the condition of the dedicated feeding valve is fully dependent on the condition of an intake valve and/or an exhaust valve. This in turn implies that the dedicated feeding valve may for instance be controlled independently of the condition of the inlet valve and/or the exhaust valve. Consequently, the feeding valve may be controlled with a focus on feeding gas, such as air, to the gas tank.

Optionally, the feeding valve is adapted for being arranged in a cylinder head and comprises a moveable valve member adapted for being arranged for movement relative to a valve seat for opening and closing, respectively, the feeding valve.

Optionally, the valve member is adapted for a linear movement between the open condition and a closed condition.

Optionally, the moveable valve member comprises a valve head adapted for contacting the valve seat and an elongated valve stem extending from the valve head.

Optionally, the one-way valve is arranged downstream of the gas feeding valve in a direction from the cylinder chamber towards the gas tank. Such a position of the one-way valve implies that the one-way valve may be implemented and/or positioned in a versatile manner.

Optionally, when the feeding valve assumes the open condition, the gas feeding arrangement is adapted to only provide fluid transport from the cylinder chamber to the gas tank, via the feeding conduit assembly. Such a dedicated fluid transport implies that the air fed to the gas tank may be appropriately clean, i.e. appropriately free from pollutants. Moreover, such a dedicated fluid transport also implies that the gas feeding to the gas tank may be controlled by the actuation of a limited number of control members, such as valves.

Optionally, the feeding valve is an electrically controlled valve, preferably the feeding valve is a solenoid valve. An electrically controlled valve implies that the feeding valve may be controlled in a flexible manner, for instance without necessarily having to take the condition of any intake valve and/or exhaust valve into account.

Optionally, the feeding valve is a poppet valve. A poppet valve implies an appropriate durability against large pressures that may occur in a cylinder chamber, such as a cylinder combustion chamber, of an internal combustion engine.

Optionally, the feeding conduit assembly comprises a gas filter. The gas filter implies that the gas, usually mostly comprising air, fed from the cylinder chamber is cleaned from pollutants, such as oil, before it reaches the gas tank. This is particularly useful if the gas supplied to the gas tank is intended to be directed to another component than an inlet system of an internal combustion engine.

Optionally, the feeding valve is adapted to be in constant fluid communication with the cylinder chamber. A constant fluid communication implies that the fluid communication between the cylinder chamber and the gas tank can be controlled in an expedient manner.

Optionally, the gas tank is a closable vehicle pressure tank.

Optionally, the gas feeding arrangement is for feeding gas from an internal combustion engine cylinder combustion chamber.

Optionally, the cylinder head assembly comprises a head surface adapted to at least partially define the cylinder chamber, the feeding valve being arranged with respect to the head surface such that the feeding valve is adapted not to extend into a portion of the cylinder chamber adapted to accommodate a piston. In other words, the feeding valve is adapted not to extend into a swept volume of the cylinder chamber. The ability not to extend into the above portion of the cylinder chamber implies that the feeding valve can be open throughout the stroke of the piston and this in turn implies an improved versatility of the control of the fluid communication between the cylinder chamber and the gas tank.

Optionally, the cylinder head assembly comprises at least one exhaust valve adapted to selectively provide fluid communication between the cylinder chamber and an exhaust system of the internal combustion engine. The feeding valve is arranged separate from the at least one exhaust valve.

According to the present invention,, the cylinder head assembly comprises an inlet valve adapted to selectively provide fluid communication between an air inlet system of the internal combustion engine and the cylinder combustion chamber. The feeding valve is arranged separate from the at least one inlet valve.

Optionally, the gas feeding arrangement is adapted to provide gas transport from the cylinder chamber to the gas tank, via the feeding conduit assembly, when the feeding valve assumes the open condition, independently of the operating state of the exhaust valve.

According to the present invention, the cylinder head assembly comprises a gas discharge conduit assembly adapted to provide a selective fluid communication between the gas tank and a gas discharge valve arrangement adapted to discharge into the cylinder chamber. As such, the gas, usually air, stored in the gas tank may be fed to the cylinder chamber to thereby improve the combustion in the cylinder chamber, for instance when the internal combustion engine is operating at low engine speeds and/or and low load.

Optionally, the gas discharge conduit assembly comprises a discharge control valve, preferably the discharge control valve being electronically controlled.

According to the present invention, the inlet valve comprises an inlet valve member moveable relative to a valve seat to thereby control the fluid communication between the air inlet system and the cylinder chamber via the inlet valve. The gas discharge conduit assembly is in fluid communication with a valve passage extending through at least a portion of the inlet valve member for supplying gas from the gas tank to the cylinder chamber. The gas discharge valve arrangement comprises a gas discharge valve arrangement member moveable relative to the inlet valve member.

Optionally, the cylinder head assembly comprises a cold side adapted to be located adjacent the air inlet system, the feeding valve being located in the cold side. Preferably, the feeding valve may be located closer to an inlet valve than to an exhaust valve of the cylinder head assembly.

A second aspect of the present invention relates to an internal combustion engine comprising a cylinder head assembly according to the first aspect of the present invention. The internal combustion engine comprises the cylinder chamber and the gas tank. Optionally, the cylinder chamber is a cylinder combustion chamber.

A third aspect of the present invention relates to a vehicle comprising a cylinder head assembly according to the first aspect of the present invention and/or an internal combustion engine according to the second aspect of the present invention.

A method, not being part of the invention, for feeding gas from an internal combustion engine cylinder chamber to a gas tank using a gas feeding arrangement comprising a feeding conduit assembly and a dedicated feeding valve. The gas feeding arrangement comprises a one-way valve adapted to prevent gas transport from the gas tank to the cylinder chamber, via the feeding conduit assembly. The method comprises controlling the feeding valve so as to assume an open condition in which the gas feeding arrangement is adapted to provide gas transport from the cylinder chamber to the gas tank, via the feeding conduit assembly.

Optionally, the cylinder chamber is a cylinder combustion chamber, adapted to receive fuel, the method comprising preventing fuel supply to the cylinder chamber when the feeding valve assumes the open condition.

Optionally, the method comprises alternately keeping the feeding valve in the open condition for a predetermined open time and keeping the feeding valve in a closed condition, preventing gas transport from the cylinder chamber to the gas tank, for a predetermined close time.

Optionally, the predetermined close time is at least two times greater, alternatively at least three times greater, than the predetermined open time.

Optionally, the predetermined open time is within the range of 0.1 to 3 seconds, preferably 0.5 to 2 seconds, and the predetermined close time is within the range of 0.5 to 8 seconds, preferably 1.5 to 7 seconds.

Optionally, the feeding valve is in constant fluid communication with the cylinder chamber. A fifth aspect of the present invention, which however does not form part of the appended claims, relates to a computer program comprising program code means for performing the steps of the fourth aspect of the present invention when the program is run on a computer.

A computer readable medium, not being part of the invention, carrying a computer program comprising program code means for performing the steps of the fourth aspect of the present invention when the program product is run on a computer.

A control unit, not being part of the invention, for controlling gas feeding from an interna combustion engine cylinder chamber to a closable gas tank, the control unit being configured to perform the steps of the method of the fourth aspect of the present invention

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 illustrates a vehicle with an internal combustion engine;
Fig. 2 schematically illustrates an embodiment of an internal combustion engine;
Fig. 3 illustrates a cylinder head assembly with a gas feeding arrangement;
Fig. 4 schematically illustrates an example not being part of the invention of an internal combustion engine, and
Fig. 5 is a flow chart of a method not being part of the present invention.

### DETAILED DESCRIPTION OF EXAMPLE EMBODIMENTS OF THE INVENTION

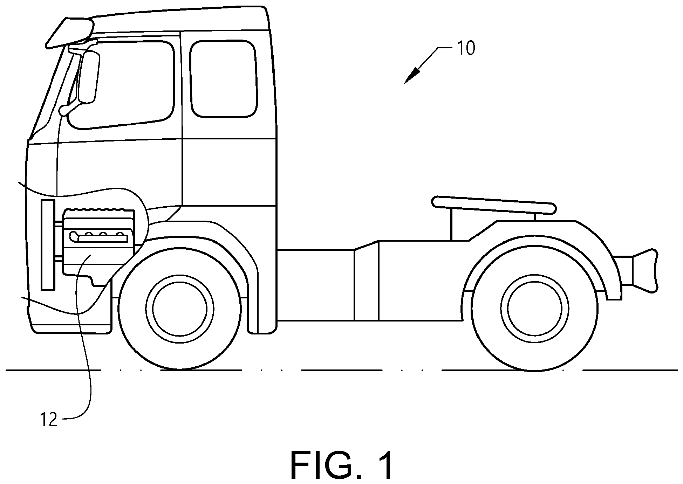

The invention will be described below for a vehicle in the form of a truck 10 such as the truck illustrated in Fig. 1. The truck 10 should be seen as an example of a vehicle which could comprise a gas feeding arrangement, a cylinder head assembly and/or an internal combustion engine according to the present invention. However, the present invention may be implemented in a plurality of different types of vehicles. Purely by way of example, the present invention could be implemented in a truck, a tractor, a car, a bus, a seagoing vessel such as a ship or a boat, a work machine such as a wheel loader or an articulated hauler, or any other type of construction equipment. Moreover, the present invention may be implemented in an internal combustion engine that need not be associated with any vehicle.

The Fig. 1 vehicle 10 comprises an internal combustion engine 12.

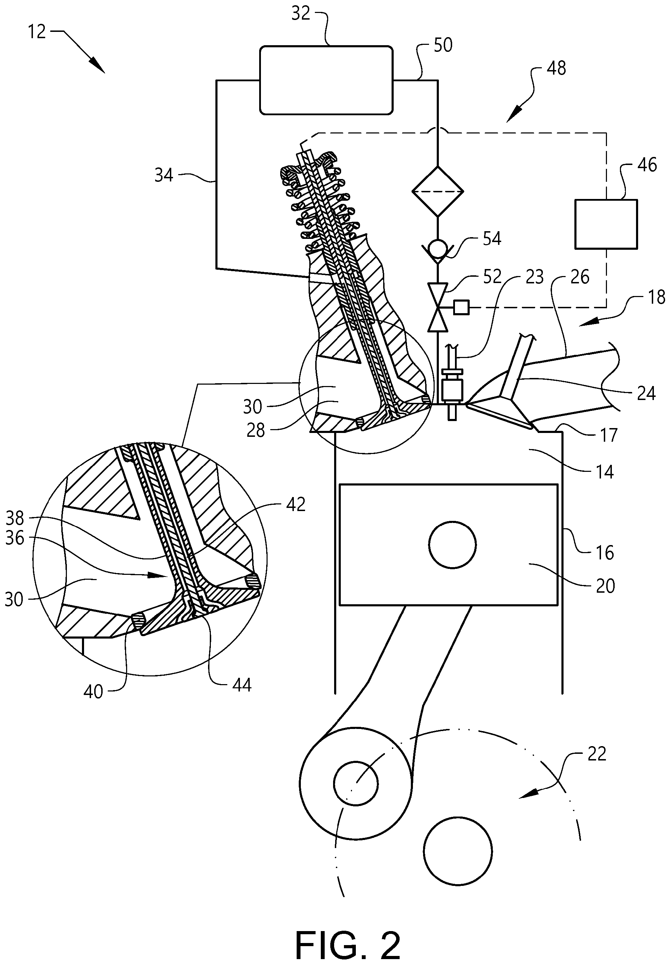

Fig. 2 illustrates a portion of an embodiment of the internal combustion engine 12 indicated in Fig. 1. The Fig. 2 embodiment of the internal combustion engine 12 comprises a cylinder chamber 14. In the Fig. 2 embodiment, the cylinder chamber 14 is defined by a cylinder wall 16, a head surface 17 of a cylinder head assembly 18 and a piston 20. The piston 20 is connected to a crank shaft 22 to thereby be reciprocally moveable relative to the head surface 17. The Fig. 2 cylinder chamber 14 is a cylinder combustion chamber since the Fig. 2 cylinder head assembly 18 comprises a fuel injector 23 adapted to discharge fuel into the cylinder chamber 14. However, it is also envisioned that the present invention may be used for cylinder chambers not being a combustion chamber. For instance, embodiments of an internal combustion engine 12 may comprise a cylinder chamber dedicated to produce pressurized gas, such as pressurized air.

Although only one cylinder chamber 14 is illustrated in Fig. 2, it is envisioned that embodiments of the internal combustion engine 12 may comprise a plurality of cylinder chambers.

Fig. 2 further illustrates that the cylinder head assembly 18 comprises at least one exhaust valve 24 adapted to selectively provide fluid communication between the cylinder chamber 14 and an exhaust system 26 of the internal combustion engine 12. Purely by way of example, the exhaust system 26 may comprise an exhaust gas after treatment system (not shown).

Moreover, Fig. 2 indicates that the cylinder head assembly 18 may comprise an inlet valve 28 adapted to selectively provide fluid communication between an air inlet system 30 of the internal combustion engine and the cylinder chamber 14.

The Fig. 2 internal combustion engine 12 further comprises a gas tank 32. Purely by way of example, the gas tank 32 may be adapted to store pressurized air that can be injected into the cylinder chamber 14 in order to ensure an appropriate combustion even at low engine speeds and/or at low engine loads. To this end, and as is exemplified in Fig. 2, the cylinder head assembly may comprise a gas discharge conduit assembly 34 adapted to provide a selective fluid communication between the gas tank 32 and a gas discharge valve arrangement 36 adapted to discharge into the cylinder chamber 14. Purely by way of example, the gas tank 32 may be a closable vehicle pressure tank.

In the embodiment illustrated in Fig. 2, the inlet valve 28 comprises an inlet valve member 38 moveable relative to a valve seat 40 to thereby control the fluid communication between the air inlet 30 system and the cylinder chamber 14 via the inlet valve 28. The gas discharge conduit assembly 34 is in fluid communication with a valve passage 42 extending through at least a portion of the inlet valve member 30 for supplying gas from the gas tank 32 to the cylinder chamber 14. The gas discharge valve arrangement 36 comprises a gas discharge valve arrangement member 44 moveable relative to the inlet valve member 38.

Purely by way of example, the gas discharge valve arrangement 36 may be electronically controlled. To this end, and as is illustrated in Fig. 2, the gas discharge valve arrangement 36 may be in communication with a control unit 46, preferably an electronic control unit.

In order to feed gas, preferably air, to the gas tank 32, the internal combustion engine 12 preferably comprises a gas feeding arrangement 48 for feeding gas from the cylinder chamber 14 to the gas tank 32. As may be gleaned from Fig. 2, the gas feeding arrangement 48 comprises a feeding conduit assembly 50 and a dedicated feeding valve 52. The feeding valve 52 is adapted to assume an open condition in which it provides for gas transport in a direction from the cylinder chamber 14 towards the gas tank 32, via the feeding conduit assembly 50.

Moreover, as is indicated in Fig. 2, the gas feeding arrangement 48 comprises a one-way valve 54 adapted to prevent gas transport from the gas tank 32 to the cylinder chamber 14, via the feeding conduit assembly 50. Purely by way of example, the one-way valve 54 may comprise or even be constituted by a check valve, such as a ball check valve. As a non-limiting example, the one-way valve 54 may comprise a spring loaded steel ball (not shown) with a silicone O-ring (not shown) as seat for the ball in the one-way valve 54.

Purely by way of example, and as is indicated in Fig. 2, the gas feeding arrangement 50 is adapted to provide gas transport from the cylinder chamber 14 to the gas tank 32, via the feeding conduit assembly 50, when the feeding valve 52 assumes the open condition, independently of the operating state of the exhaust valve 24. As a non-limiting example, when the feeding valve 52 assumes the open condition, gas may be fed from the cylinder chamber 14 to the gas tank 32, via the feeding conduit assembly 50, even when the exhaust valve 24 assumes a closed condition, i.e. a condition preventing fluid transport from the cylinder chamber 14 to the exhaust system 26.

Moreover, as is indicated in Fig. 2, the feeding valve 52 may be arranged separate from the at least one exhaust valve 24. Further, the feeding valve 52 may be arranged separate from the at least one inlet valve 28.

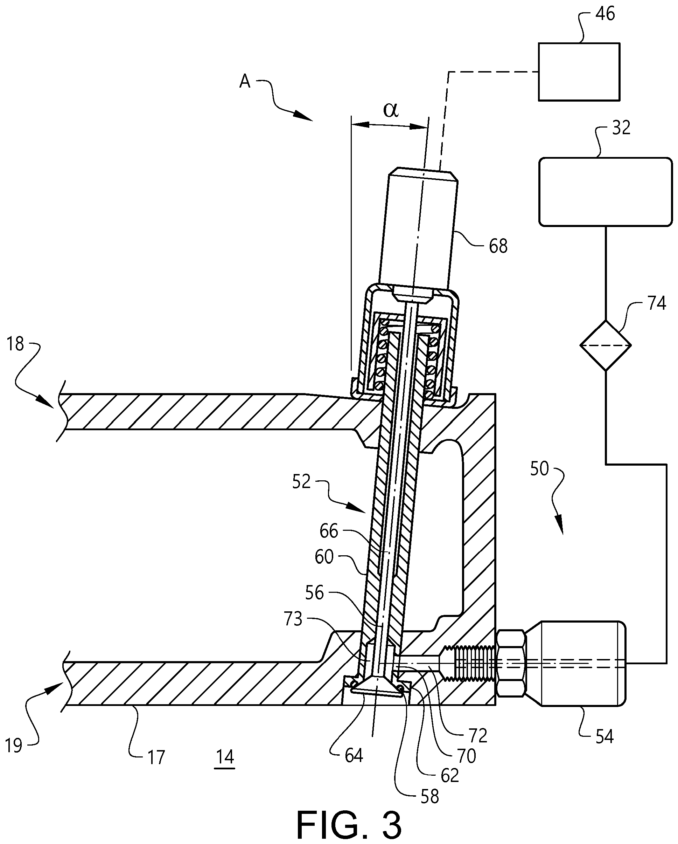

Fig. 3 illustrates a cross section of a part of a cylinder head assembly 18 comprising an embodiment of the gas feeding arrangement 50. In the Fig. 3 gas feeding arrangement 50, the feeding valve 52 is adapted for being arranged in a cylinder head 19 of the cylinder head assembly 18. Moreover, the implementation of the feeding valve 52 illustrated in Fig. 3 is a poppet valve. As such, the Fig. 3 feeding valve 52 comprises a moveable valve member 56 adapted for being arranged for movement relative to a valve seat 58 for opening and closing, respectively, the feeding valve 52.

As is exemplified in Fig. 3, the feeding valve 52 may comprise a sleeve 60 extending through at least a portion of the cylinder head 19. Purely by way of example, the sleeve 60 may have a diameter being within the range of 5 to 15 mm. The portion of the sleeve 60 being adapted to be closest to the cylinder chamber 14 may be adapted to comprise the valve seat 58 of the valve member 56.

Moreover, as is indicated in Fig. 3, the portion of the sleeve 60 being adapted to be closest to the cylinder chamber 14 may comprise a shoulder 62 adapted to abut a portion of the cylinder head 19 in order to ensure that the sleeve 60 does not move upwards in the Fig. 3 view.

The Fig. 3 sleeve 60 may be arranged in a sleeve opening of the cylinder head 19. The cylinder head 19 has an axial extension along an axial direction A being parallel to an intended direction of movement of the piston (not shown) in the cylinder chamber 14. As is indicated in Fig. 3, the sleeve opening may be such that a centre line of the sleeve 60 forms an angle α with the axial direction A. Purely by way of example, the above angle α may be in the range of 2° - 5°.

Purely by way of example, the cylinder head assembly 18, and in particular the cylinder head 19, comprises a cold side adapted to be located adjacent the air inlet system (not shown in Fig. 3). The feeding valve 52 is located in the cold side.

The valve member 56 may be adapted for linear movement between the open condition and a closed condition. With reference to the Fig. 3 implementation of the feeding valve 52, the valve member 56 may be adapted for linear movement relative to the sleeve 60. Furthermore, as is indicated in Fig. 3, the valve member 56 may comprise a valve head 64 adapted for contacting the valve seat 58 and an elongated valve stem 66 extending from the valve head 64.

As another example, and as is indicated in Fig. 3, the feeding valve 52 is arranged with respect to the head surface 17 of the cylinder head assembly 18 such that the feeding valve 52 is adapted not to extend into a portion of the cylinder chamber 14 adapted to accommodate a piston. In the implementation of the feeding valve 52 illustrated in Fig. 3, the valve head 64 is adapted not to extend into the cylinder chamber 14 even when the feeding valve 52 is in the open condition.

The feeding valve 52 may be an electrically controlled valve, preferably the feeding valve 52 is a solenoid valve. The Fig. 3 implementation of the feeding valve 52 comprises an actuator 68, such as a solenoid, adapted to move the valve member 56 relative to the sleeve 60. Purely by way of example, and as is illustrated in Fig. 3, the actuator 68 may be in communication with the control unit 46.

As a non-limiting example, the feeding valve 52 may be adapted to be in constant fluid communication with the cylinder chamber 14. In the Fig. 3 implementation of the feeding valve 52, at least the valve head 64 is adapted to be in constant fluid communication with the cylinder chamber 14.

Purely by way of example, the one-way valve 54 of the gas feeding arrangement 50 may be arranged downstream of the gas feeding valve 52 in a direction from the cylinder chamber 14 towards the gas tank 32. In the Fig. 3 embodiment, the sleeve 60 comprises a side opening 70 in fluid communication with the one-way valve 54. In fact, in the Fig. 3 embodiment, the side opening 70 of the sleeve is in fluid communication with the one-way valve 54 via a conduit 72 in the cylinder head 19. As such, when the valve member 56 does not abut the valve seat 58, gas from the cylinder chamber 14 may enter an interior cavity 73 of the sleeve 60, exit the sleeve 60 via its side opening 70 and thereafter reach the one-way valve 54 via a conduit 72.

As is indicated in Fig. 3, when the feeding valve 52 assumes the open condition, the gas feeding arrangement is adapted to only provide fluid transport from the cylinder chamber 14 to the gas tank 32, via the feeding conduit assembly 50. As such, as a non-limiting example, the feeding valve 52 assuming the open condition does not result in a fluid transport from the cylinder chamber 14, via the feeding conduit assembly 50, to any other portion of an internal combustion engine, such as an exhaust system or an inlet system (not shown in Fig. 3).

As another non-limiting example, the feeding conduit assembly 50 may comprise a gas filter 74. As is exemplified in the Fig. 3 embodiment, the gas filter 74 may be located between the one-way valve 54 and the gas tank 32, as seen in an intended direction of flow from the one-way valve 54 to the gas tank 32.

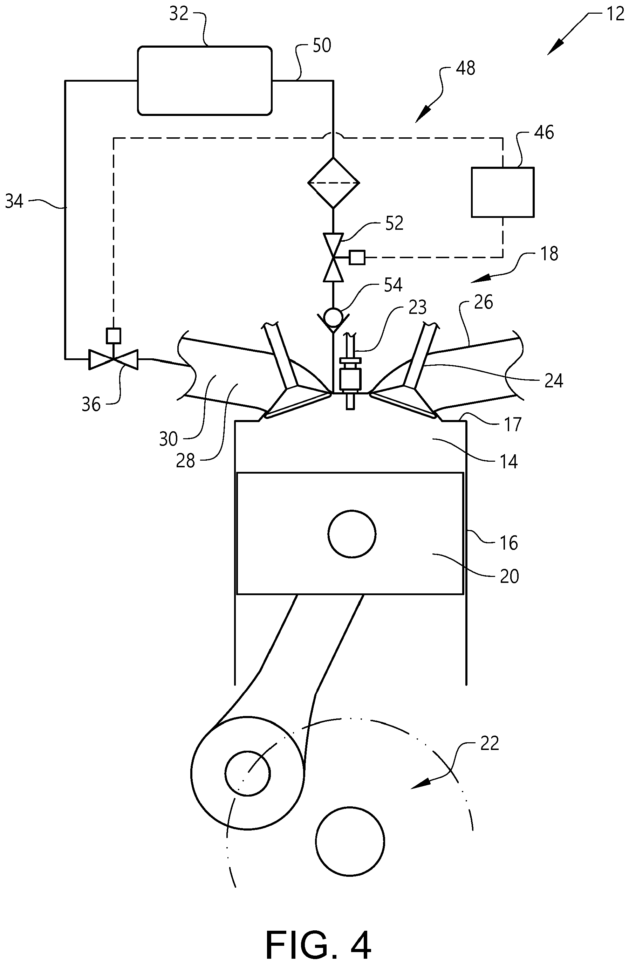

Fig. 4 illustrates a portion of an example of an internal combustion engine 12 not being part of the present invention. As compared to the Fig. 2 embodiment, the gas discharge conduit assembly 34 of the Fig. 4 example is adapted to discharge air into the air inlet system 30. To this end, the Fig. 4 gas discharge valve arrangement 36 is adapted to discharge air into the air inlet system 30 for subsequent discharge into the cylinder chamber 14.

In the Fig. 4 example the feeding valve 52 is located between the one-way valve 54 and the gas tank 32, as seen in an intended direction of flow from the cylinder chamber 14 to the gas tank 32. In the Fig. 4 example, the feeding valve 52 need not be a poppet valve, but may be another type of valve, such as an on-off valve (not shown).

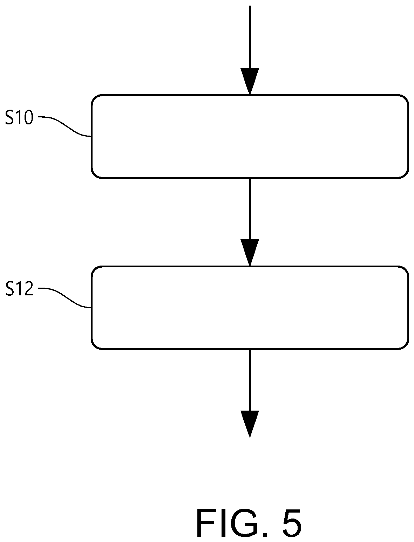

Fig. 5 illustrates a flow chart of a method, not part of the invention, for feeding gas from an internal combustion engine cylinder chamber 14 to a gas tank 32 using a gas feeding arrangement 48 comprising a feeding conduit assembly 50 and a dedicated feeding valve 52. The gas feeding arrangement 48 comprising a one-way valve 54 adapted to prevent gas transport from the gas tank 32 to the cylinder chamber 14, via the feeding conduit assembly 50. The method comprises: S10 controlling the feeding valve 52 so as to assume an open condition in which the gas feeding arrangement 48 is adapted to provide gas transport from the cylinder chamber 14 to the gas tank 32, via the feeding conduit assembly 50.

The Fig. 5 example further envisions that the cylinder chamber 14 may be a cylinder combustion chamber, adapted to receive fuel, for instance using a fuel injector 23 such as the one illustrated in Fig. 2. The method may further comprise S12 preventing fuel supply to the cylinder combustion chamber 14 when the feeding valve 52 assumes the open condition.

As a non-limiting example, the method may comprise alternately keeping the feeding valve in the open condition for a predetermined open time and keeping the feeding valve in a closed condition, preventing gas transport from the cylinder chamber 14 to the gas tank 32, for a predetermined close time. Purely by way of example, the predetermined close time may be at least two times greater, alternatively at least three times greater, than the predetermined open time.

As a further non-limiting example, the predetermined open time may be within the range of 0.1 to 3 seconds, preferably 0.5 to 2 seconds, and the predetermined close time is within the range of 0.5 to 8 seconds, preferably 1.5 to 7 seconds.

It is to be understood that the present invention is not limited to the embodiments described above and illustrated in the drawings; rather, the skilled person will recognize that many changes and modifications may be made within the scope of the appended claims.

## Claims

1. A cylinder head assembly (18) for an internal combustion engine, wherein said cylinder head assembly (18) comprises a gas feeding arrangement (48) for feeding gas from an internal combustion engine cylinder chamber (14) to a gas tank (32), said gas feeding arrangement (48) comprising a feeding conduit assembly (50) and a dedicated feeding valve (52), said feeding valve (52) being adapted to assume an open condition in which it provides for gas transport in a direction from said cylinder chamber (14) towards said gas tank (32), via said feeding conduit assembly (50), wherein said gas feeding arrangement (48) comprises a one-way valve (54) adapted to prevent gas transport from said gas tank (32) to said cylinder chamber (14), via said feeding conduit assembly (50), said cylinder head assembly (18) comprises an inlet valve (28) adapted to selectively provide fluid communication between an air inlet system (30) of the internal combustion engine and said cylinder chamber (14), said feeding valve (52) being arranged separate from said at least one inlet valve (28), wherein said cylinder head assembly (18) comprises a gas discharge conduit assembly (34) adapted to provide a selective fluid communication between said gas tank (32) and a gas discharge valve arrangement (36) adapted to discharge into said cylinder chamber (14), **characterised in that** said inlet valve (28) comprises an inlet valve member (38) moveable relative to a valve seat (40) to thereby control the fluid communication between said air inlet system (30) and said cylinder chamber (14) via said inlet valve (28), said gas discharge conduit assembly (34) being in fluid communication with a valve passage extending through at least a portion of said inlet valve member (38) for supplying gas from said gas tank (32) to said cylinder chamber (14), said gas discharge valve arrangement (36) comprising a gas discharge valve arrangement member (44) moveable relative to said inlet valve member (38).

2. The cylinder head assembly (18) according to claim 1, wherein the feeding valve (52) is adapted for being arranged in a cylinder head (19) and comprises a moveable valve member (56) adapted for being arranged for movement relative to a valve seat (58) for opening and closing, respectively, the feeding valve (52), preferably the valve member (56) is adapted for a linear movement between the open condition and a closed condition.

3. The cylinder head assembly (18) according to claim 2, wherein the moveable valve member (56) comprises a valve head (64) adapted for contacting said valve seat (58) and an elongated valve stem (66) extending from said valve head (64).

4. The cylinder head assembly (18) according to any one of the preceding claims, wherein the one-way valve (54) is arranged downstream of the gas feeding valve (52) in a direction from the cylinder chamber (14) towards the gas tank (32).

5. The cylinder head assembly (18) according any one of the preceding claims, wherein, when said feeding valve (52) assumes said open condition, said gas feeding arrangement (48) is adapted to only provide fluid transport from said cylinder chamber (14) to said gas tank (32), via said feeding conduit assembly (50).

6. The cylinder head assembly (18) according any one of the preceding claims, wherein said feeding valve (52) is an electrically controlled valve, preferably said feeding valve (52) is a solenoid valve.

7. The cylinder head assembly (18) according any one of the preceding claims, wherein said feeding valve (52) is a poppet valve.

8. The cylinder head assembly (18) according any one of the preceding claims, wherein said feeding conduit assembly (50) comprises a gas filter (74).

9. The cylinder head assembly (18) according any one of the preceding claims, wherein said feeding valve (52) is adapted to be in constant fluid communication with said cylinder chamber (14) and/or wherein said gas tank (32) is a closable vehicle pressure tank.

10. The cylinder head assembly (18) according any one of the preceding claims, wherein said gas feeding arrangement (48) is for feeding gas from an internal combustion engine cylinder combustion chamber.

11. The cylinder head assembly (18) according to any one of the preceding claims, wherein said cylinder head assembly (18) comprises a head surface (17) adapted to at least partially define said cylinder chamber (14), said feeding valve (52) being arranged with respect to said head surface (17) such that said feeding valve (52) is adapted not to extend into a portion of said cylinder chamber (14) adapted to accommodate a piston.

12. The cylinder head assembly (18) according to any one of the preceding claims, wherein said cylinder head assembly (18) comprises at least one exhaust valve (24) adapted to selectively provide fluid communication between said cylinder chamber (14) and an exhaust system (26) of the internal combustion engine, said feeding valve (52) being arranged separate from said at least one exhaust valve (24).

13. The cylinder head assembly (18) according to any one of the preceding claims, wherein said gas feeding arrangement (48) is adapted to provide gas transport from said cylinder chamber (14) to said gas tank (32), via said feeding conduit assembly (50), when said feeding valve (52) assumes said open condition, independently of the operating state of said exhaust valve (24).

14. The cylinder head assembly (18) according to any one of the preceding claims, wherein said gas discharge conduit assembly (34) comprises a discharge control valve, preferably said discharge control valve being electronically controlled.

15. The cylinder head assembly (18) according to any one of the preceding claims, wherein said cylinder head assembly (18) comprises a cold side adapted to be located adjacent said air inlet system (30), said feeding valve (52) being located in said cold side.

16. An internal combustion engine (12) comprising a cylinder head assembly (18) according to any one of the preceding claims, said internal combustion engine comprising said cylinder chamber (14) and said gas tank (32), preferably said cylinder chamber (14) is a cylinder combustion chamber.

17. A vehicle (10) comprising a cylinder head assembly (18) according to any one of claims 1 - 15 and/or an internal combustion engine according to claim 16.

## Patentansprüche

1. Zylinderkopfanordnung (18) für einen Verbrennungsmotor, wobei die Zylinderkopfanordnung (18) eine Gasförderanordnung (48) zum Fördern von Gas von einer Verbrennungsmotorzylinderkammer (14) zu einem Gastank (32) umfasst, wobei die Gasförderanordnung (48) eine Förderleitungsanordnung (50) und ein zweckbestimmtes Förderventil (52) umfasst, wobei das Förderventil (52) ausgebildet ist, einen offenen Zustand einzunehmen, in dem es Gastransport in einer Richtung von der Zylinderkammer (14) zu dem Gastank (32) über die Förderleitungsanordnung (50) bereitstellt, wobei die Gasförderanordnung (48) ein Einwegventil (54) umfasst, das ausgebildet ist, Gastransport von dem Gastank (32) zu der Zylinderkammer (14) über die Förderleitungsanordnung (50) zu verhindern, wobei die Zylinderkopfanordnung (18) ein Einlassventil (28) umfasst, das ausgebildet ist, selektiv strömungstechnische Verbindung zwischen einem Lufteinlasssystem (30) des Verbrennungsmotors und der Zylinderkammer (14) bereitzustellen, wobei das Förderventil (52) separat von dem mindestens einen Einlassventil (28) angeordnet ist, wobei die Zylinderkopfanordnung (18) eine Gasabgabeleitungsanordnung (34) umfasst, die ausgebildet ist, eine selektive strömungstechnische Verbindung zwischen dem Gastank (32) und einer Gasabgabeventilanordnung (36) bereitzustellen, die ausgebildet ist, in die Zylinderkammer (14) abzugeben, **dadurch gekennzeichnet, dass** das Einlassventil (28) ein Einlassventilelement (38) umfasst, das relativ zu einem Ventilsitz (40) beweglich ist, um dadurch die strömungstechnische Verbindung zwischen dem Lufteinlasssystem (30) und der Zylinderkammer (14) über das Einlassventil (28) zu steuern, wobei die Gasabgabeleitungsanordnung (34) in strömungstechnischer Verbindung mit einem Ventildurchlass ist, der sich durch mindestens einen Abschnitt des Einlassventilelements (38) erstreckt, um Gas von dem Gastank (32) zu der Zylinderkammer (14) zu leiten, wobei die Gasabgabeventilanordnung (36) ein Gasabgabeventilanordnungselement (44) umfasst, das relativ zu dem Einlassventilelement (38) beweglich ist.

2. Zylinderkopfanordnung (18) nach Anspruch 1, wobei das Förderventil (52) ausgebildet ist, in einem Zylinderkopf (19) angeordnet zu sein und ein bewegliches Ventilelement (56) umfasst, das ausgebildet ist, zur Bewegung relativ zu einem Ventilsitz (58) angeordnet zu sein, um das Förderventil (52) zu öffnen bzw. zu schließen, wobei bevorzugt das Ventilelement (56) für eine lineare Bewegung zwischen dem offenen Zustand und einem geschlossenen Zustand ausgebildet ist.

3. Zylinderkopfanordnung (18) nach Anspruch 2, wobei das bewegliche Ventilelement (56) einen Ventilkopf (64)umfasst, der zum Kontaktieren des Ventilsitzes (58) ausgebildet ist, und eine längliche Ventilspindel (66), die sich von dem Ventilkopf (64) erstreckt.

4. Zylinderkopfanordnung (18) nach einem der vorstehenden Ansprüche, wobei das Einwegventil (54) stromabwärts des Gasförderventils (52) in einer Richtung von der Zylinderkammer (14) zu dem Gastank (32) angeordnet ist.

5. Zylinderkopfanordnung (18) nach einem der vorstehenden Ansprüche, wobei, wenn das Förderventil (52) den offenen Zustand einnimmt, die Gasförderanordnung (48) ausgebildet ist, nur Fluidtransport von der Zylinderkammer (14) zu dem Gastank (32) über die Förderleitungsanordnung (50) bereitzustellen.

6. Zylinderkopfanordnung (18) nach einem der vorstehenden Ansprüche, wobei das Förderventil (52) ein elektrisch gesteuertes Ventil ist, wobei das Förderventil (52) bevorzugt ein Solenoidventil ist.

7. Zylinderkopfanordnung (18) nach einem der vorstehenden Ansprüche, wobei das Förderventil (52) ein Tellerventil ist.

8. Zylinderkopfanordnung (18) nach einem der vorstehenden Ansprüche, wobei die Förderleitungsanordnung (50) ein Gasfilter (74) umfasst.

9. Zylinderkopfanordnung (18) nach einem der vorstehenden Ansprüche, wobei das Förderventil (52) ausgebildet ist, in konstanter strömungstechnischer Verbindung mit der Zylinderkammer (14) zu sein, und/oder wobei der Gastank (32) ein verschließbarer Fahrzeugdrucktank ist.

10. Zylinderkopfanordnung (18) nach einem der vorstehenden Ansprüche, wobei die Gasförderanordnung (48) zum Fördern von Gas von einer Verbrennungsmotorzylinderverbrennungskammer dient.

11. Zylinderkopfanordnung (18) nach einem der vorstehenden Ansprüche, wobei die Zylinderkopfanordnung (18) eine Kopffläche (17) umfasst, die ausgebildet ist, mindestens teilweise die Zylinderkammer (14) zu definieren, wobei das Förderventil (52) in Bezug auf die Kopffläche (17) so angeordnet ist, dass das Förderventil (52) ausgebildet ist, sich nicht in einen Abschnitt der Zylinderkammer (14) zu erstrecken, die ausgebildet ist, einen Kolben aufzunehmen.

12. Zylinderkopfanordnung (18) nach einem der vorstehenden Ansprüche, wobei die Zylinderkopfanordnung (18) mindestens ein Abgasventil (24) umfasst, das ausgebildet ist, selektiv strömungstechnische Verbindung zwischen der Zylinderkammer (14) und einem Abgassystem (26) des Verbrennungsmotors bereitzustellen, wobei das Förderventil (52) separat von dem mindestens einen Abgasventil (24) angeordnet ist.

13. Zylinderkopfanordnung (18) nach einem der vorstehenden Ansprüche, wobei die Gasförderanordnung (48) ausgebildet ist, Gastransport von der Zylinderkammer (14) zu dem Gastank (32) über die Förderleitungsanordnung (50) bereitzustellen, wenn das Förderventil (52) den offenen Zustand einnimmt, unabhängig vom Betriebszustand des Abgasventils (24).

14. Zylinderkopfanordnung (18) nach einem der vorstehenden Ansprüche, wobei die Gasabgabeleitungsanordnung (34) ein Abgabesteuerventil umfasst, wobei das Abgabesteuerventil bevorzugt elektronisch gesteuert ist.

15. Zylinderkopfanordnung (18) nach einem der vorstehenden Ansprüche, wobei die Zylinderkopfanordnung (18) eine Kaltseite umfasst, die ausgebildet ist, neben dem Lufteinlasssystem (30) zu liegen, wobei das Förderventil (52) in der Kaltseite liegt.

16. Verbrennungsmotor (12), umfassend eine Zylinderkopfanordnung (18) nach einem der vorstehenden Ansprüche, wobei der Verbrennungsmotor die Zylinderkammer (14) und den Gastank (32) umfasst, wobei die Zylinderkammer (14) bevorzugt eine Zylinderverbrennungskammer ist.

17. Fahrzeug (10), umfassend eine Zylinderkopfanordnung (18) nach einem der Ansprüche 1-15 und/oder einen Verbrennungsmotor nach Anspruch 16.

## Revendications

1. Ensemble culasse de cylindre (18) pour un moteur à combustion interne, dans lequel ledit ensemble culasse de cylindre (18) comprend un agencement d'alimentation en gaz (48) pour l'alimentation en gaz d'une chambre de cylindre (14) de moteur à combustion interne à un réservoir de gaz (32), ledit agencement d'alimentation en gaz (48) comprenant un ensemble conduit d'alimentation (50) et une soupape d'alimentation (52) dédiée, ladite soupape d'alimentation (52) étant adaptée pour adopter une condition ouverte dans laquelle elle assure un transport de gaz dans une direction depuis ladite chambre de cylindre (14) vers ledit réservoir de gaz (32), via ledit ensemble conduit d'alimentation (50), dans lequel ledit agencement d'alimentation en gaz (48) comprend une soupape unidirectionnelle (54) adaptée pour empêcher un transport de gaz dudit réservoir de gaz (32) à ladite chambre de cylindre (14), via ledit ensemble conduit d'alimentation (50), ledit ensemble culasse de cylindre (18) comprend une soupape d'entrée (28) adaptée pour assurer sélectivement une communication fluidique entre un système d'entrée d'air (30) du moteur à combustion interne et ladite chambre de cylindre (14), ladite soupape d'alimentation (52) étant agencée séparément de ladite au moins une soupape d'entrée (28), dans lequel ledit ensemble culasse de cylindre (18) comprend un ensemble conduit de décharge de gaz (34) adapté pour assurer une communication fluidique sélective entre ledit réservoir de gaz (32) et un agencement soupape de décharge de gaz (36) adapté pour une décharge dans ladite chambre de cylindre (14), **caractérisé en ce que** ladite soupape d'entrée (28) comprend un organe de soupape d'entrée (38) mobile par rapport à un siège de soupape (40) pour ainsi commander la communication fluidique entre ledit système d'entrée d'air (30) et ladite chambre de cylindre (14) via ladite soupape d'entrée (28), ledit ensemble conduit de décharge de gaz (34) étant en communication fluidique avec un passage de soupape s'étendant à travers au moins une portion dudit organe de soupape d'entrée (38) pour délivrer un gaz dudit réservoir de gaz (32) à ladite chambre de cylindre (14), ledit agencement soupape de décharge de gaz (36) comprenant un organe d'agencement de soupape de décharge (44) mobile par rapport audit organe de soupape d'entrée (38).

2. Ensemble culasse de cylindre (18) selon la revendication 1, dans lequel la soupape d'alimentation (52) est adaptée pour être agencée dans une culasse de cylindre (19) et comprend un organe de soupape (56) mobile adapté pour être agencé pour un déplacement par rapport à un siège de soupape (58) pour ouvrir et fermer, respectivement, la soupape d'alimentation (52), de préférence l'organe de soupape (56) est adapté pour un déplacement linéaire entre la condition ouverte et une condition fermée.

3. Ensemble culasse de cylindre (18) selon la revendication 2, dans lequel l'organe de soupape (56) mobile comprend une tête de soupape (64) adaptée pour venir au contact dudit siège de soupape (58) et une tige de soupape (66) allongée s'étendant à partir de ladite tête de soupape (64).

4. Ensemble culasse de cylindre (18) selon l'une quelconque des revendications précédentes, dans lequel la soupape unidirectionnelle (54) est agencée en aval de la soupape d'alimentation en gaz (52) dans une direction depuis la chambre de cylindre (14) vers le réservoir de gaz (32).

5. Ensemble culasse de cylindre (18) selon l'une quelconque des revendications précédentes, dans lequel, lorsque ladite soupape d'alimentation (52) adopte ladite condition ouverte, ledit agencement d'alimentation en gaz (48) est adapté pour assurer uniquement un transport de fluide de ladite chambre de cylindre (14) audit réservoir de gaz (32), via ledit ensemble conduit d'alimentation (50).

6. Ensemble culasse de cylindre (18) selon l'une quelconque des revendications précédentes, dans lequel ladite soupape d'alimentation (52) est une soupape commandée électriquement, de préférence ladite soupape d'alimentation (52) est une soupape à solénoïde.

7. Ensemble culasse de cylindre (18) selon l'une quelconque des revendications précédentes, dans lequel ladite soupape d'alimentation (52) est une soupape à clapet.

8. Ensemble culasse de cylindre (18) selon l'une quelconque des revendications précédentes, dans lequel ledit ensemble conduit d'alimentation (50) comprend un filtre à gaz (74).

9. Ensemble culasse de cylindre (18) selon l'une quelconque des revendications précédentes, dans lequel ladite soupape d'alimentation (52) est adaptée pour être en communication fluidique constante avec ladite chambre de cylindre (14) et/ou dans lequel ledit réservoir de gaz (32) est un réservoir sous pression de véhicule fermable.

10. Ensemble culasse de cylindre (18) selon l'une quelconque des revendications précédentes, dans lequel ledit agencement d'alimentation en gaz (48) est destiné à une alimentation en gaz depuis une chambre de combustion de cylindre de moteur à combustion interne.

11. Ensemble culasse de cylindre (18) selon l'une quelconque des revendications précédentes, dans lequel ledit ensemble culasse de cylindre (18) comprend une surface de culasse (17) adaptée pour définir au moins partiellement ladite chambre de cylindre (14), ladite soupape d'alimentation (52) étant agencée vis-à-vis de ladite surface de culasse (17) de sorte que ladite soupape d'alimentation (52) soit adaptée pour ne pas s'étendre dans une portion de ladite chambre de cylindre (14) adaptée pour loger un piston.

12. Ensemble culasse de cylindre (18) selon l'une quelconque des revendications précédentes, dans lequel ledit ensemble culasse de cylindre (18) comprend au moins une soupape d'échappement (24) adaptée pour assurer sélectivement une communication fluidique entre ladite chambre de cylindre (14) et un système d'échappement (26) du moteur à combustion interne, ladite soupape d'alimentation (52) étant agencée séparément de ladite au moins une soupape d'échappement (24).

13. Ensemble culasse de cylindre (18) selon l'une quelconque des revendications précédentes, dans lequel ledit agencement d'alimentation en gaz (48) est adapté pour assurer un transport de gaz de ladite chambre de cylindre (14) audit réservoir de gaz (32), via ledit ensemble conduit d'alimentation (50), lorsque ladite soupape d'alimentation (52) adopte ladite condition ouverte, indépendamment de l'état de fonctionnement de ladite soupape d'échappement (24).

14. Ensemble culasse de cylindre (18) selon l'une quelconque des revendications précédentes, dans lequel ledit ensemble conduit de décharge de gaz (34) comprend une soupape de commande de décharge, de préférence ladite soupape de commande de décharge étant commandée électroniquement.

15. Ensemble culasse de cylindre (18) selon l'une quelconque des revendications précédentes, dans lequel ledit ensemble culasse de cylindre (18) comprend un côté froid adapté pour être situé adjacent audit système d'entrée d'air (30), ladite soupape d'alimentation (52) étant située dans ledit côté froid.

16. Moteur à combustion interne (12) comprenant un ensemble culasse de cylindre (18) selon l'une quelconque des revendications précédentes, ledit moteur à combustion interne comprenant ladite chambre de cylindre (14) et ledit réservoir de gaz (32), de préférence ladite chambre de cylindre (14) est une chambre de combustion de cylindre.

17. Véhicule (10) comprenant un ensemble culasse de cylindre (18) selon l'une quelconque des revendications 1 à 15 et/ou un moteur à combustion interne selon la revendication 16.
